Europäisches Patentamt

European Patent Office

Office européen des brevets

(19)

(11) Publication number: **0 041 745**

A1

(12) **EUROPEAN PATENT APPLICATION**

(21) Application number: **81200503.1**

(22) Date of filing: **12.05.81**

(51) Int. Cl.³: **C 09 J 3/16**
**C 08 L 61/24, C 08 L 61/32**
**C 08 G 12/12, C 08 L 97/02**
**C 08 G 12/40**

(30) Priority: **06.06.80 IT 4684980**

(43) Date of publication of application:
**16.12.81 Bulletin 81/50**

(84) Designated Contracting States:
**AT BE CH DE FR GB IT LI LU NL SE**

(71) Applicant: **SADEPAN CHIMICA S.p.A.**

**I-46019 Viadana (Mantova)(IT)**

(72) Inventor: **Cassinotti, Mario**
**10, Via S. Nicola**
**I-46019 Viadana (Mantova)(IT)**

(72) Inventor: **Rizzi, Achille**
**6, Viale Lombardia**
**I-46019 Viadana (Mantova)(IT)**

(74) Representative: **Corradini, Corrado**
**4, Via Sessi**
**I-42100 Reggio Emilia(IT)**

(54) Urea-formaldehyde resin based adhesive containing calcium and/or ammonium ligninsulphonate as additive, a urea-formaldehyde resin modified with calcium and/or ammonium ligninsulphonate, and methods for the production thereof, for preparing agglomerated wood panels.

(57) A normal urea-formaldehyde resin based adhesive for agglomerated wood products has dry calcium and ammonium ligninsulphonate added to it before use in the proportion of between 13 and 15% by weight of the adhesive; a urea-formaldehyde resin for use as a base product for adhesives intended for agglomerated wood products is modified with calcium and/or ammonium ligninsulphonate, which is added during the preparation of the resin to the extent of between 1 and 17% by weight of dry ligninsulphonate with respect to the urea-formaldehyde mixture, to give a final resin having the following specification: urea 1 mole; formaldehyde between 1.2 and 1.6 moles; dry calcium and/or ammonium ligninsulphonate between 1 and 17% by weight of the urea-formaldehyde mixture; soda; and acetic acid in sufficient quantity to obtain a pH of greater than 7.2.

Croydon Printing Company Ltd.

0041745

- 1 -

UREA-FORMALDEHYDE RESIN BASED ADHESIVE CONTAINING CALCIUM
AND/OR AMMONIUM LIGNINSULPHONATE AS ADDITIVE, A UREA-FORMALDE-
HYDE RESIN MODIFIED WITH CALCIUM AND/OR AMMONIUM LIGNINSUL-
PHONATE, AND METHODS FOR THE PRODUCTION THEREOF, FOR
PREPARING AGGLOMERATED WOOD PANELS

The use of adhesives based on resins of the urea-formaldehyde
type is known in the industrial manufacture of so-called
chipboard panels, plywood and precomposed panels of plywood
and agglomerated wood in general.

Said adhesives provide for the mutual cohesion of the various
parts of the wood, but have a certain drawback with regard to
the mechanical and physical characteristics of the product,
such as shape stability with time, preservation of the tensile
and bending strength, and lack of resilience.

A further and much greater drawback, which is reflected by
serious application limitations, is the free formaldehyde
contained in the panel, which reaches a value of about 50 mg
per 100 grams of dry panel, this being extremely dangerous in
terms of environmental pollution, especially in closed spaces.

It has been surprisingly found that the addition of calcium
and/or ammonium ligninsulphonate, as contained in the wash
liquid for the timber used for example in cellulose production,
improves the aforesaid parameters when added to the normal
resin composition.

If the adhesive is produced in the usual manner by mixing resin, water and hardener, and then adding ligninsulphonate before use, results are obtained which are already satisfactory.

However, the best results are obtained by adding the ligninsulphonate during the preparation of the resin, and then using this latter diluted and acidified in the normal manner.

It should be noted at this point that the ligninsulphonate to be used according to the invention is a composite material, of which it is not possible to precisely determine the chemical composition, and which is usually obtainable in very large quantities as the waste product of processes for the preparation of cellulose or for the total or partial decoloration of wood in general.

Said liquid has a dry residue of between 50 and 150 grams per litre, and is usually available in a concentration of 50 to 60% in water, referred to the dry product, and with a sulphur content, referred to the dry product, of between 6% and 8% by weight.

As stated heretofore, one of the methods for using ligninsulphonate as a component of urea-formaldehyde resin based adhesives comprises the addition thereof to the adhesive in the following weight proportions, at the end of the adhesive preparation cycle.

The following materials are fed into a mixer:
69 to 73% of normal urea-formaldehyde resin
 9 to 12% of water
 2 to  5% of a normal hardener in a 20% solution
         (for example ammonium chloride $NH_4Cl$)

12.05.81

0041745

12 to 14% of ligninsulphonate as usually available, i.e. in a concentration of about 55% of dry product diluted in water.

After mixing, a final product (obviously a mixture) is obtained, with which the pieces of wood to constitute the agglomerated wood product are coated in a normal plant.

One embodiment of the method is illustrated in the following example.

EXAMPLE 1

The following were fed into a mixer of 200 litres capacity, in the order stated:

100 kg of urea-formaldehyde resin as normally obtainable commercially, for example the SADECOL type produced by the applicant

15 kg of water

5 kg of a 20% aqueous solution of ammonium chloride $NH_4Cl$

20 kg of ligninsulphonate as heretofore defined, having a concentration of 55% diluted in water.

The resultant mixture was used to coat (wet) wooden chips in the normal manner.

The mass thus obtained was fed to a well known BISONIT moulding machine of the wind type.

In this manner, the mattress or mat is obtained, and is subsequently pressed in order to produce the chipboard panel.

With respect to chipboard panels produced by conventional methods, the panels obtained in this manner are substantially more resilient, have greater stability with time, and a smaller free formaldehyde content which is less than 30 mg per 100 g of dry panel.

In contrast, the tensile and bending strength are slightly less than in the case of panels produced without ligninsulphonate addition.

The method for preparing urea-formaldehyde resin based adhesive modified with ligninsulphonate during the production of the resin is as follows.

Formaldehyde, urea and soda in the proportions given hereinafter are fed as raw materials to a reaction vessel, i.e. a normal reactor or autoclave consisting of a sealed vessel heated internally or externally and fitted with an internal mixer:

| | |
|---|---|
| urea | 1 mole |
| formaldehyde | 1.8 - 2.2 moles |
| soda | a sufficient quantity to obtain a pH of between 7 and 9. |

After feeding the raw materials and having checked that the pH lies within the desired range, mixing is commenced with simultaneous heating of the reactor until a temperature of 40 to $45^{\circ}C$ is attained.

When said temperature is reached, heating is stopped and, while continuing mixing, ligninsulphonate is added in liquid form, constituted as stated by the simple timber wash liquid resulting from industrial producers of cellulose and the like, having a concentration of about 55% of dry product in water.

The quantity of ligninsulphonate to be added is between 2% and 30% by weight of the previously obtained reaction product, according to the type of application for which the adhesive is intended.

For example, the following ligninsulphonate percentages are suggested:

chipboard panels 6 to 14%

plywood 13 to 30%.

In the case of precomposed products, additions of between 2% and 8% are recommended.

Having made said addition, the new mixture is again heated until a temperature of about 90°C is attained.

On reaching this temperature, heating is again stopped and, after measuring the pH, the reaction product is acidified until its pH lies between 5 and 5.7, for example by adding acetic acid (CH$_3$COOH).

Heating is again carried out until a temperature of about 95°C is reached, and this temperature is maintained while continuing mixing, until the product attains the required water dilutability and viscosity to enable it to be marketed for the scheduled applications. On attaining these values (viscosity at 20°C of between 300 and 1000 c.p.s. and water dilutability of at least one part of resin in two parts of water), soda is added until a pH of greater than 7.5 is obtained. The product is cooled to 57°C, and urea is added in order to buffer the free formaldehyde until the final urea/formaldehyde molar ratio lies between 1:1.2 and 1:1.6. It is then cooled to 25 - 30°C and discharged from the reactor.

The dry product residue, found by heating 1 gram of product to 120°C for 2 hours, exceeds 63%.

0041745

The free formaldehyde, measured by analysis at $0^{o}C$, is less than 0.2%.

One embodiment of the method is illustrated in the following example.

EXAMPLE 2

366.57 g of formaldehyde having a concentration of 40% by weight are fed into a 1 litre glass flask complete with stirrer and placed in a heating bath, and the acidity is neutralised with 20% sodium hydroxide until the pH lies between 8.5 and 8.8.

145.17 g of 100% urea are added, and the mixture heated to $40^{o}C$. 18.23 g of water and 22.27 g of dry ligninsulphonate are added, and the pH is maintained at between 7 and 7.5, if necessary by adding sodium hydroxide. The mixture is heated to $90^{o}C$, and acetic acid concentrated to 50% is added in sufficient quantity to obtain a pH of 5.2-5.4.

The temperature is allowed to rise to $95^{o}C$, and mixing is carried out until a viscosity of 40 c.p.s. is obtained.

At this point, the pH is adjusted to 7.7 - 8 with sodium hydroxide, the mixture is cooled to $55^{o}C$, and 125 g of water are distilled off. After distillation, 64.3 g of 100% urea are added, it is allowed to dissolve, and the mixture cooled to $20^{o}C$.

The resin obtained has the following specification and characteristics:
percentage formulation by weight:
- formaldehyde of 100% concentration                  29.84%
- urea of 100% concentration                          42.62%
- ligninsulphonate (1) of 100% concentration           4.53%

- water                                    23.01%
(1) in the final analysis, the presence of the ligninsulphonate is deduced from the weight of sulphur contained,
    which is 6-8% of the dry ligninsulphonate.
- dry residue from 1 gram of product heated for
  2 hours at 120°C                                   $>$ 65%
- viscosity                              400 - 650 c.p.s.
- pH at 20°C                             7.8 - 8.5
- free formaldehyde at 0°C                    $<$ 0.2%

The production cost of the adhesive by the method heretofore
described shows a saving of between 5 and 10% over conventional adhesives, and in addition the agglomerated wood
products which are manufactured using the present adhesive
have better mechanical, time stability and resilience
characteristics, and also better tensile and bending
strengths than conventional products.

A further and not indifferent advantage of the invention is
that it provides for the use of considerable quantities of
ligninsulphonate, which at the present time is seen as a
highly polluting effluent product.

The invention is not limited to the single embodiments heretofore described, and modifications and improvements can be
made thereto without leaving the scope of the inventive idea,
the basic characteristics of which are summarised in the
following claims.

PATENT CLAIMS

1. A urea-formaldehyde resin modified with calcium and/or ammonium ligninsulphonate and suitable for use as a base product for adhesives for agglomerated wood products, as heretofore described, characterised by having the following composition:

- urea         1 mole
- formaldehyde        1.2 to 1.6 moles
- dry calcium and/or ammonium ligninsulphonate between 1 and 12% by weight of the urea-formaldehyde mixture, calculable from the weight of sulphur present in the product on the basis that this represents between 6 and 8% by weight of the dry ligninsulphonate
- soda and/or acetic acid in quantities sufficient to attain a pH of greater than 7.2 in the final product.

2. A method for producing urea-formaldehyde resin modified with ligninsulphonate and suitable for use as a base product for adhesives for agglomerated wood products, as heretofore described, characterised by the following operations:
- mixing formaldehyde, urea and soda in a normal reactor in the following proportions:
  - urea        1 mole
  - formaldehyde    1.8 - 2.2 moles
  - soda in sufficient quantity to give a pH of between 7 and 9

  and heating the mixture until a temperature of between $40^{\circ}C$ and $45^{\circ}C$ is reached
- interrupting heating, then adding between 2% and 30% of liquid ligninsulphonate having a concentration of between 50 and 60% of dry product diluted in water, while continuing to mix
- heating again to a temperature of about $90^{\circ}C$

- interrupting heating, and acidifying the product to a pH of between 5 and 5.7 while continuing to mix
- heating again to a temperature of about 95°C, and maintaining this temperature until the viscosity of the product lies between 300 and 1000 c.p.s., and its miscibility in water is at least one part of resin in two parts of water
- adding soda to give a pH of greater than 7.5
- adding urea to buffer the free formaldehyde until the final urea-formaldehyde molar ratio is between 1:1.2 and 1:1.6.

3. A urea-formaldehyde resin based adhesive modified with ligninsulphonate for agglomerated wood products, characterised by having the following composition:

- urea-formaldehyde resin of the type normally available commercially (SADECOL of Messrs. SADEPAN CHIMICA S.p.A.)

  69 to 73%
- dry ammonium chloride $NH_4Cl$                          6.5 to 7.5%
- dry sodium and/or ammonium ligninsulphonate, determinable from the quantity of sulphur present in the final product on the basis that the dry ligninsulphonate contains between 6 and 8% by weight of sulphur                         9 to 11%
- water                                                   18 to 22%.

4. A method for preparing urea-formaldehyde resin based adhesive to which sodium and/or ammonium ligninsulphonate is added, as heretofore described, characterised by consisting of mixing, in a normal mixer, between 69 and 73% by weight of a normal urea-formaldehyde resin, between 6.5 and 7.5% by weight of dry ammonium chloride $NH_4Cl$, between 9 and 11% by weight of dry sodium and/or ammonium ligninsulphonate, and between 18 and 22% by weight of water.

0041745

# EUROPEAN SEARCH REPORT

Application number
EP 81 20 0503

European Patent Office

| DOCUMENTS CONSIDERED TO BE RELEVANT | | |
|---|---|---|
| Category | Citation of document with indication, where appropriate, of relevant passages | Relevant to claim |
| X | US - A - 3 994 850 (W.N. WILLEGGER)<br>* Claims; column 1, lines 65-66 *<br>-- | 1-4 |
| | DE - A - 2 745 808 (BASF)<br>* Claims *<br>-- | 1,3-4 |
| | WO - A - 79/00977 (AB.EDLER)<br>* Claims *<br>-- | 1,3-4 |
| | CH - A - 477 484 (NORDCHIMIE)<br>* Claims *<br>-- | 1-2,4 |
| | ADHASION, vol. 23, no, 12<br>December 1979<br>E. ROFFAEL: "Fortschritte in der Verwendung von Sulfitablaugen als Binde- und Zusatzmittel bei der Herstellung von Holzspanplatten" pages 368-370.<br>* Pages 368-370 *<br>---- | 1-4 |

**CLASSIFICATION OF THE APPLICATION (Int. Cl.³)**

C 09 J    3/16
C 08 L  61/24
              61/32
C 08 G  12/12
C 08 L  97/02
C 08 G  12/40

**TECHNICAL FIELDS SEARCHED (Int. Cl.³)**

C 09 J    3/16
C 08 L  97/02
C 08 G  12/12
C 08 G  12/40

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 16-09-1981 | DERAEDT |

EPO Form 1503.1   06.78